# EUROPÄISCHE PATENTSCHRIFT

(11) **EP 3 695 197 B1**
(45) Veröffentlichungstag und Bekanntmachung des Hinweises auf die Patenterteilung: **03.07.2024**
(21) Anmeldenummer: 18769156.3
(22) Anmeldetag: 11.09.2018
(51) Int. Cl.: G01F 23/28, G01F 23/284, G01F 23/2962, G01S 13/88, G01S 15/88, G01S 7/292, G01S 7/35, G01S 7/527

(54) **VERFAHREN ZUR ERMITTLUNG DES FÜLLSTANDES EINES IN EINEM BEHÄLTER BEFINDLICHEN FÜLLGUTES**
METHOD FOR DETERMINING THE FILLING LEVEL OF A PRODUCT CONTAINED IN A CONTAINER
PROCÉDÉ DE DÉTERMINATION DU NIVEAU DE REMPLISSAGE D'UN PRODUIT CONTENU DANS UN RÉCIPIENT

(30) Priorität: 10.10.2017 DE 102017123529
(43) Veröffentlichungstag der Anmeldung: 19.08.2020
(73) Patentinhaber: Endress+Hauser SE+Co. KG, 79689 Maulburg (DE)
(72) Erfinder: GORENFLO, Stefan, 79688 Hausen (DE); MALINOVSKIY, Alexey, 79689 Maulburg (DE)
(74) Vertreter: Koslowski, Christine Adelheid
(86) Internationale Anmeldenummer: PCT/EP2018/074485
(87) Internationale Veröffentlichungsnummer: WO 2019/072473

(56) Entgegenhaltungen:
- DE-A1-102004 055 551
- DE-A1-102012 107 146
- DE-A1-102013 107 847
- DE-A1-102014 119 589

## Beschreibung

Die Erfindung betrifft ein Verfahren zur sicheren und genauen Ermittlung des Füllstandes eines in einem Behälter befindlichen Füllgutes mittels eines Ultraschall- oder Radar-basierten Füllstandsmessgerätes.

In der Prozessautomatisierungstechnik werden vielfach Feldgeräte eingesetzt, die zur Erfassung oder zur Beeinflussung von Prozessvariablen dienen. Zur Erfassung von Prozessvariablen werden Sensoren eingesetzt, die beispielsweise in Füllstandsmessgeräten, Durchflussmessgeräten, Druck- und Temperaturmessgeräten, pH-Redoxpotential-Messgeräten, Leitfähigkeitsmessgeräten, oder vergleichbaren Geräten zum Einsatz kommen. Sie erfassen die entsprechenden Prozessvariablen, wie Füllstand, Durchfluss, Druck, Temperatur, pH-Wert, Redoxpotential oder Leitfähigkeit. Verschiedenste solcher Feldgeräte-Typen wird von der Firma Endress + Hauser hergestellt und vertrieben.

Zur Füllstandsmessung von Füllgütern in Behältern haben sich berührungslose Messverfahren etabliert, da sie robust und wartungsarm sind. Dabei werden unter dem Begriff "Behälter" im Rahmen der Erfindung auch nicht-abgeschlossene Behältnisse, wie beispielsweise Becken, Seen oder fließende Gewässer verstanden. Ein weiterer Vorteil berührungsloser Messverfahren besteht in der Fähigkeit, den Füllstand quasi kontinuierlich messen zu können. Im Bereich der kontinuierlichen Füllstandsmessung werden daher überwiegend Ultraschall- oder Radar-basierte Messverfahren eingesetzt (im Kontext dieser Patentanmeldung beziehen sich der Begriff Ultraschall auf SchallWellen in einem Frequenzbereich zwischen 14 KHz und 1 GHz; Der Begriff "Radar" auf Signale bzw. elektromagnetische Wellen mit Frequenzen zwischen 0.03 GHz und 300 GHz).

Ein etabliertes Messprinzip bildet hierbei das Pulslaufzeit-Messprinzip. Hierbei werden Ultraschall- oder Mikrowellenpulse zyklisch in Richtung des Füllguts ausgesandt und die Laufzeit bis zum Empfang des entsprechenden Echo-Pulses gemessen. Auf Basis dieses Messprinzips können Füllstandsmessgeräte mit vergleichsweise geringem schaltungstechnischem Aufwand realisiert werden. Ein Radar-basiertes Füllstandsmessgerät, welches nach dem Puls-Laufzeit-Verfahren arbeitet, ist beispielsweise in der Offenlegungsschrift DE 10 2012 104 858 A1 beschrieben. Das Ultraschall-basierte Pendant ist unter anderem in der Patentschrift EP 1480021 B1 gezeigt.

Sofern eine komplexere Schaltungstechnik in Kauf genommen werden kann, bietet sich zur Radar-basierten Füllstandsmessung auch FMCW ("*Frequency Modulated Continuous Wave*") als Messprinzip an. Bezüglich eines typischen Aufbaus von FMCW-basierten Füllstandsmessgeräten sei exemplarisch auf die Offenlegungsschrift DE 10 2013 108 490 A1 verwiesen.

Das Messprinzip von FMCW- Radar basierten Entfernungsmessverfahren beruht darauf, ein kontinuierliches Mikrowellen-Signal mit einer modulierten Frequenz auszusenden. Dabei liegt die Frequenz des Signals in einem festgelegten Frequenzband im Bereich einer standarisierten Mittenfrequenz. Kennzeichnend für FMCW ist hierbei, dass die Sende-Frequenz nicht konstant ist, sondern sich periodisch innerhalb eines definierten Frequenzbandes ändert. Die zeitliche Änderung ist hierbei standardmäßig linear und weist eine Sägezahn- beziehungsweise Dreiecks-Form auf. Eine Sinus-förmige Änderung kann prinzipiell jedoch auch verwendet werden. Im Gegensatz zum Pulslaufzeit-verfahren wird die Entfernung bzw. der Füllstand bei Implementierung des FMCW-Verfahrens auf Basis der momentanen Frequenzdifferenz zwischen dem aktuell empfangenen Empfangssignal und dem momentan ausgesendeten Sendesignal bestimmt.

Bei jedem dieser Messprinzipien (Ultraschall, Pulsradar, und FMCW) wird zur Ermittlung des Füllstandes anhand des Empfangssignals eine entsprechende Auswertungskurve erstellt. Bei Verwendung von Ultraschall entspricht die Auswertungskurve grundsätzlich direkt dem zeitlichen Amplitudenverlauf des Empfangssignals. Im Falle des Pulsradarbasierten Verfahrens wird die Auswertungskurve aufgrund der hohen Pulsfrequenz hingegen durch Unterabtastung des Empfangssignals erstellt. Dadurch bildet die Auswertungskurve das rohe Empfangssignal zeitgedehnt ab. Bei Implementierung des FMCW-Verfahrens wird die Auswertekurve durch Mischen des Sendesignals mit dem Empfangssignal erstellt. In allen Fällen spiegelt die Auswertungskurve jedoch die Amplitude des Empfangssignals in Abhängigkeit der Messdistanz wieder.

Der Füllstand wird aus der Auswertungskurve beispielsweise durch Detektion und örtlicher Zuweisung eines lokalen Maximums bestimmt. Um das entsprechende Maximum zweifelsfrei erkennen zu können, ist es hierzu bekannt, die Auswertungskurve mittels eines geeigneten Filterverfahrens wie Mittelwert-, Maximalwert- oder Tiefpassfilterung zu glätten, um im Anschluss den Füllstand anhand der geglätteten Auswertungskurve bestimmen zu können. Ein Radar-basiertes Füllstandsmessgerät, dessen Auswertungskurve mittels eines gleitenden Maximalwertfilters geglättet wird, ist beispielsweise in der deutschen Veröffentlichungsschrift DE 10 2014 119 589 A1 gezeigt. Die Glättung der Auswertungskurve durch gleitende Mittelwert- oder Minimalwert-Bildung zur Bestimmung des Füllstandes ist unter anderem in der Patentanmeldung DE 10 2012 107 146 A1 offenbart. Die Generierung einer geglätteten Referenzkurve auf Basis von gleitender Mittelwert- oder Minimalwert-Bildung, um die Auswertungskurve bei der Füllstands-Bestimmung hiermit abgleichen zu können, ist wiederum in DE 10 2004 055 551 A1 veröffentlicht.

Ein Füllstandsmessgerät, bei dem eine bereichsweise Filterung der Auswertungskurve durchgeführt wird, ist in der Offenlegungsschrift DE 10 2013 107 847 A1 beschrieben. Im dortigen Verfahren wird im mittleren Bereich der Auswertungskurve im Vergleich zu den äußeren Bereichen eine stärkere Filterung angewandt, um insbesondere im Falle einer schnellen Füllstandsänderung die Entstehung von Artefakt-Echos zu verhindern. Dabei ist der mittlere Bereich insofern verschiebbar, als dass dieser Bereich dem Nutzecho nachgezogen wird

Eine geringe Glättung bietet den Vorteil, dass Maxima örtlich besser aufgelöst werden können. Hierdurch lässt sich der Füllstand genauer bestimmen. Dies wird durch eine stärkere Glättung eingeschränkt, allerdings sinkt durch eine stärkere Glättung die Fehler- bzw. Störanfälligkeit der Füllstandsmessung. Dies ist insbesondere dann von Vorteil, wenn das Füllgut, dessen Füllstand zu bestimmen ist, eine sehr raue bzw. unebene Füllgut-Oberfläche aufweist, so dass das Empfangssignal stark verrauscht ist. Vor allem bei welligen oder nicht-flüssigen Füllgütern wie Korngütern ist dies zu beobachten, wobei die korrekte Füllstandsmessung in letzterem Fall zudem durch die Bildung von Schüttgut-Kegeln erschwert werden kann.

Der Erfindung liegt daher die Aufgabe zugrunde, auch bei schwierigen Mess-Umgebungen eine genaue und sichere Füllstandsmessung zu gewährleisten.

Die Erfindung löst diese Aufgabe durch ein Verfahren zur Ermittlung des Füllstandes eines in einem Behälter befindlichen Füllgutes mittels eines entsprechenden Füllstandsmessgerätes, folgende Verfahrensschritte umfassend:
- Aussenden eines Sendesignals in Richtung des Füllgutes,
- Empfangen eines von der Messdistanz abhängigen Empfangssignals,
- Erstellen einer Auswertungskurve anhand von zumindest dem Empfangssignal,
- Glätten der Auswertungskurve mittels zumindest eines Filterverfahrens, und
- Bestimmung des Füllstandes anhand der geglätteten Auswertungskurve.

Die Auswertungskurve wird in Abhängigkeit der Messdistanz verschieden stark geglättet. Als Filterverfahren zur Glättung der Auswertungskurve wird eine Tiefpassfilterung, wie beispielsweise eine gleitende Mittelwertfilterung oder eine insbesondere gleitende Maximalwertfilterung eingesetzt. Dementsprechend bezieht sich die Begriff "Filterung" bzw. "Glättung" im Rahmen der Erfindung ausdrücklich nicht auf das vollständige Ausblenden einzelner Teilbereiche der Auswertungskurve. Die Messdistanz wird wiederum in einen Nahbereich, einen mittleren Teilbereich und einen Fernbereich unterteilt. Dabei zeichnet sich das erfindungsgemäße Verfahren dadurch aus, dass die Glättung im Nahbereich und im Endbereich im Vergleich zum mittleren Teilbereich geringer eingestellt ist. Denn gerade in den äußeren beiden Teilbereichen kommt es häufig vor, dass die Auswertungskurve von parasitären Mehrfach-Echos, Behälterboden-Echos oder geräteinternen Echos geprägt ist.

Somit kann der Füllstand L bei verschiedensten Einsatzzwecken einerseits sicher und andererseits trotzdem sehr genau bestimmt werden. Dabei lässt sich das Verfahren nicht nur anwenden, wenn das Sendesignal in Form eines Ultraschallsignals, ausgesendet wird, sondern auch, wenn das Sendesignal in Form eines Radar-Signals, insbesondere eines Radar-Signals nach dem FMCW- oder Pulslaufzeit-Verfahren, ausgesendet wird.

Die erfindungsgemäße Veränderung der Glättung über die Messdistanz kann auf verschiedene Arten eingestellt werden: Für den Fall, dass als Filterverfahren eine Mittelwertfilterung und/oder eine Maximalwertfilterung eingesetzt werden/wird, kann der Mittelwertfilter und/oder der Maximalwertfilter beispielsweise mit einer Fensterbreite, die sich in Abhängigkeit der Messdistanz ändert, ausgelegt werden. Hierzu kann die Fensterbreite linear oder nichtlinear, insbesondere exponentiell und/oder logarithmisch, mit der Messdistanz verändert werden. Alternativ oder zusätzlich ist es möglich, die Fensterbreite in zumindest zwei verschiedenen Teilbereichen der Messdistanz konstant mit voneinander verschiedenen Breiten einzustellen. In diesem Zusammenhang ist die Fensterbreite als diejenige Anzahl der nebeneinander liegenden Messpunkte der Auswertungskurve definiert, aus denen jeweils ein Mittelwert und/oder ein Maximalwert bestimmt wird. Diese Definition kann entsprechend auch auf die Länge des jeweiligen Segmentes der Messdistanz, über die sich diese Anzahl der nebeneinander liegenden Messpunkte erstreckt, übertragen werden.

Neben Variante, die Glättung über die Messdistanz mittels der Fensterbreite zu ändern, ist es auch möglich, in zumindest einem Teilbereich der Messdistanz ein von einem angrenzenden Teilbereich abweichendes Filterverfahren zu implementieren, um so in den einzelnen Teilbereichen eine unterschiedliche Glättung über die Messdistanz zu erreichen.

Zur Durchführung des Verfahrens nach einer der zuvor genannten Ausführungsvarianten hat ein entsprechendes Füllstandmessgerät zumindest folgende Komponenten zu umfassen:
- Eine Sendeeinheit, die in Abhängigkeit des implementierten Messprinzips ausgelegt ist, das Sendesignal in Form einer Ultraschall- oder Radar-Welle auszusenden (im Falle von Radar insbesondere ab Frequenzen oberhalb von 70 GHz ein halbleiterbasierter Primärstrahler; bei Ultraschall z. B. eine entsprechende Schaltung mit einem Piezo-Schwinger),
- Eine Empfangseinheit wie bspw. eine Horn-Antenne oder eine Resonator-Struktur, die ausgestaltet ist, um das korrespondierende Empfangssignal zu empfangen, und
- Eine Auswerteeinheit (beispielsweise als Microcontroller oder FPGA realisiert), die konzipiert ist, um
   ∘ anhand von zumindest dem Empfangssignal die Auswertekurve zu erstellen,
   ∘ die Auswertekurve in Abhängigkeit der Messdistanz verschieden zu glätten, und
   ∘ anhand der geglätteten Auswertekurve den Füllstand zu bestimmen.

Die Erfindung wird anhand der nachfolgenden Figuren erläutert. Es zeigt:
Fig. 1: Eine typische Anordnung eines Füllstandsmessgerätes,
Fig. 2: eine ungeglättete, sowie eine durch Maximalwertfilterung geglättete Auswertungskurve, und
Fig. 3: verschiedene Varianten zur Glättung der Auswertungskurve in Abhängigkeit der Messdistanz.

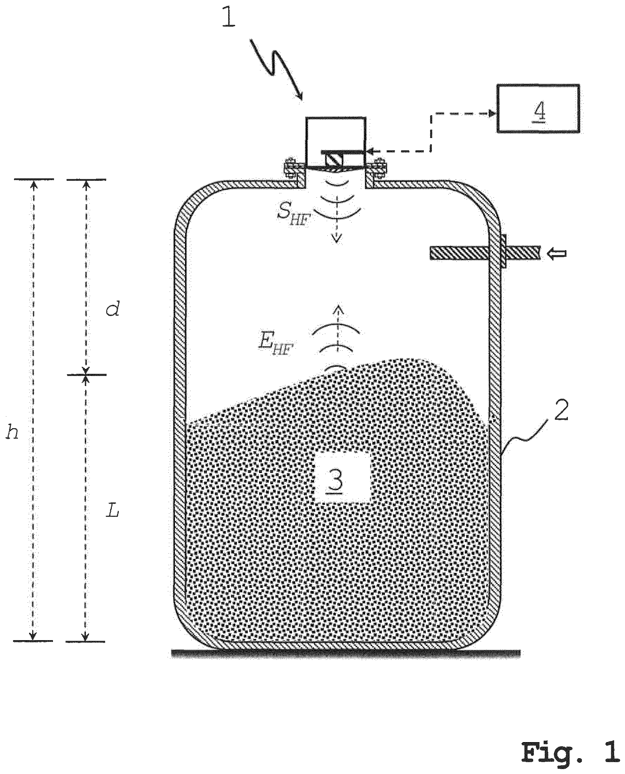

Zum allgemeinen Verständnis der Erfindung ist in Fig. 1 eine typische Anordnung eines Ultraschall- oder Radar-basierten Füllstandsmessgerätes 1 an einem Behälter 2 gezeigt. Im Behälter 2 befindet sich ein Füllgut 3, dessen Füllstand L durch das Füllstandsmessgerät 1 zu bestimmen ist. Dazu ist das Füllstandsmessgerät 1 in einer vorbekannten Einbauhöhe h oberhalb des Füllgutes 3 am Behälter 2 angebracht. Hierbei kann der Behälter 2 je nach Anwendung bis zu mehr als 100 m hoch sein. Unabhängig vom implementierten Messprinzip (Ultraschall, Pulsradar, FMCW) umfasst das Füllstandsmessgerät 1 als grundlegende Funktionsblöcke:
- eine Sendeeinheit, die ausgelegt ist, das Sendesignal S_{HF} auszusenden (für Ultraschall beispielsweise ein entsprechend angesteuertes Piezo-Element; Bei Radar ab 70 GHz beispielsweise einen Halbleiter-basierten Primärstrahler),
- eine Empfangseinheit zum Empfang des entsprechenden Empfangssignals E_{HF}, und
- eine Auswerteeinheit, die konzipiert ist, um auf Basis des Empfangssignals E_{HF} ein Auswertekurve zu erstellen bzw. zu glätten und anhand dessen den Füllstand L zu bestimmen.

In der Regel ist das Füllstandsmessgerät 1 über ein Bussystem, etwa "PROFIBUS", "HART" oder "Wireless HART" mit einer übergeordneten Einheit 4, beispielsweise einem Prozessleitsystem, verbunden. Hierüber können zum einen Informationen über den Betriebszustand des Füllstandsmessgerätes 1 kommuniziert werden. Es können auch Informationen über den Füllstand L übermittelt werden, um gegebenenfalls am Behälter 2 vorhandene Zuflüsse zu steuern.

Wie aus Fig. 1 ersichtlich wird, ist das Füllstandsmessgerät 1 so am Behälter 2 angeordnet, dass es Radar- oder Ultraschall-basierte Sendesignale S_{HF} in Richtung der Oberfläche des Füllgutes 3 aussendet. Nach Reflektion an der Füllgut-Oberfläche empfängt das Füllstandsmessgerät 1 die reflektierten Empfangssignale E_{HF} nach einer Laufzeit t. Hierbei hängt die Laufzeit t von der Messdistanz d bzw. von der Entfernung h - L zur Füllgut-Oberfläche ab.

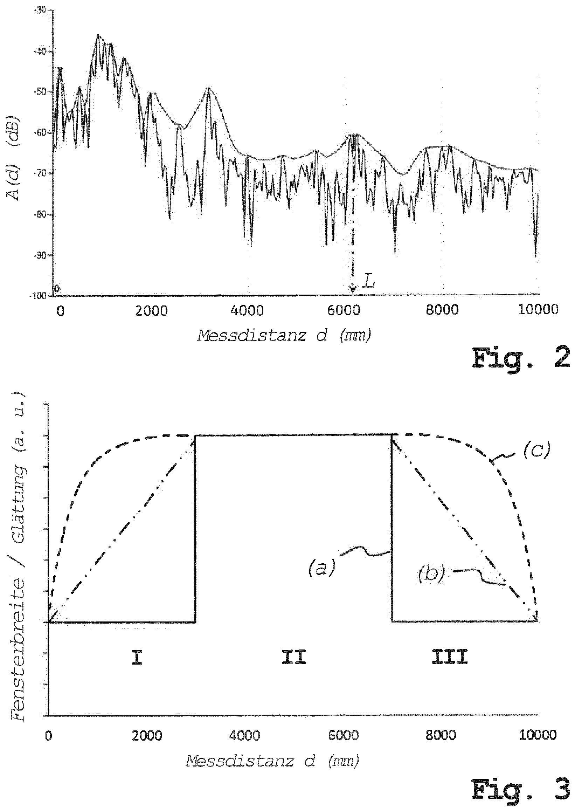

Zur Ermittlung des Füllstandes L wird das Empfangssignal E_{HF} in Form einer Auswertungskurve A(d) aufgezeichnet. Sofern das Füllstandsmessgerät 1 auf Basis von Ultraschall arbeitet, entspricht die Auswertungskurve A(d) unmittelbar dem zeitlichen (und somit dem von der Messdistanz d abhängigen) Amplituden-Verlauf des Empfangssignals E_{HF}. Im Falle des Pulsradar-Prinzips wird die Auswertungskurve A(d) aufgrund der hohen Pulsfrequenz durch das Füllstandsmessgerät 1 in der Regel durch Unterabtastung des Empfangssignals E_{HF} erstellt. Sofern im Füllstandsmessgerät 1 das FMCW-Verfahren implementiert ist, wird die Auswertekurve durch Mischen des Sendesignals S_{HF} mit dem Empfangssignal E_{HF} erstellt. Wie in Fig. 2 gezeigt wird, spiegelt die Auswertungskurve A(d) jedoch unabhängig vom implementierten Messprinzip die Amplitude des Empfangssignals in Abhängigkeit der Messdistanz wieder.

In Fig. 1 ist schematisch angedeutet, dass das Füllgut 3 in Form eines Schüttgutes mit entsprechendem Schüttgutkegel vorliegt. Dementsprechend ist die in Fig. 2 gezeigte, korrespondierende Auswertungskurve A(d) vergleichsweise stark verrauscht. Aus der ungefilterten Auswertungskurve A(d) ist es daher unter diesen Bedingungen nicht mit ausreichender Sicherheit möglich, dasjenige Amplituden-Maximum der Auswertungskurve A(d), das durch Reflektion des Sendesignals S_{HF} an der Füllgut-Oberfläche hervorgerufen wurde, korrekt zuzuordnen. Aus diesem Grund ist zur Bestimmung des Füllstands L daher in der Regel eine Filter-basierte Glättung der Auswertungskurve A(d) erforderlich. In Fig. 2 ist aus diesem Grund zusätzlich die per Maximalwertfilterung und anschließender Mittelwertbildung geglättete Auswertungskurve A(d) dargestellt. Im Vergleich zu einer Tiefpassfilterung bietet dies den Vorteil, dass hierdurch kein Verlust bzw. keine Verringerung der Amplitude bewirkt wird.

Wie in Fig. 2 zu erkennen ist, resultiert durch die Maximalwertfilterung ein Kurvenverlauf, der grob den lokalen Maxima der ungefilterten Auswertungskurve A(d) folgt. Je stärker dabei die Filterung ist (das heißt, je größer dabei die Fensterbreite, über die die Maximalwerte gemittelt werden), desto stärker werden kleine lokale Maxima ausgeblendet.

Fig. 2 illustriert außerdem, dass auf Basis der geglätteten Auswertungskurve A(d) der Füllstand L einem lokalen Maximum zugeordnet werden kann. Eine sehr hochgenaue Zuordnung des Füllstandswertes L ist dabei jedoch aufgrund des stark geglätteten Maximums nicht möglich. Erfindungsgemäß wird daher vorgeschlagen, die Auswertungskurve A(d) in Abhängigkeit der Messdistanz verschieden, also mit verschiedenen Filter-Stärken, zu glätten. Hierzu gibt es, wie in Fig. 3 dargestellt ist, unterschiedliche Umsetzungsmöglichkeiten:
Eine erste Möglichkeit zur Messdistanz-abhängigen Glättung besteht darin, die Messdistanz in verschiedene Teilbereiche I, II, III zu gliedern und in jedem der Teilbereiche I, II, II jeweils eine konstante Filter-Stärke einzustellen, wobei die Filterstärke von der des angrenzenden Teilbereichs I, II, III abweicht. Diese potentielle Art der Umsetzung ist in Kurve (a) von Fig. 3 verdeutlicht. Alternativ oder zusätzlich hierzu ist es auch denkbar, den Filter so einzustellen, dass sich die Filter-Stärke zumindest in einem der Teilbereiche I, II, III kontinuierlich ändert. Diesbezüglich ist in Kurve (b) von Fig. 3 eine lineare Änderung der Filter-Stärke dargestellt. Wie durch Kurve (c) angedeutet wird, ist jedoch auch jegliche andere Art der kontinuierlichen Änderung, wie logarithmisch, exponentiell, etc., implementierbar.

Bei allen der in Fig. 3 gargestellten Verläufe (a, b, c) ist die Glättungsstärke im Nahbereich I und im Fernbereich III (jeweils in Bezug zum Füllstandsmessgerät 1) im Vergleich zum mittleren Teilbereich II der Messdistanz d erniedrigt. Diese Strategie, die Glättung im Nahbereich I und im Endbereich III zu abzuschwächen (bzw. die Glättung im mittleren Teilbereich II zu verstärken) ist besonders geeignet, um den Füllstand L auf erfindungsgemäße Weise sicher und trotzdem genau bestimmen zu können: Insbesondere im Nahbereich I und im Endbereich III kann das Empfangssignal E_{HF} von parasitären Mehrfach-Echos, Behälterboden-Echos oder geräteinternen Echos gestört sein.

Neben der Änderung der Filterstärke bzw. der Stärke der Glättung besteht zudem eine weitere Variante zur Umsetzung der Erfindung darin, in unterschiedlichen Teilbereichen I, II, III der Messdistanz jeweils unterschiedliche Filtertypen einzusetzen: Bezogen auf Fig. 3 bedeutet dies beispielsweise, die Auswertungskurve A(d) im mittleren Teilbereich II mittels einer Tiefpassfilterung zu glätten, während in den anderen Teilbereichen I, III eine Maximalwertfilterung implementiert ist. Dabei wird die Stärke der Glättung im Fall von Maximalwert- oder Mittelwert-Filterung durch Vergrößerung der Fensterbreite erhöht. Bei Tiefpassfilterung wird die Filterstärke entsprechend durch den Dämpfungsfaktor des Tiefpasses eingestellt.

## Patentansprüche

1. Verfahren zur Ermittlung des Füllstandes (L) eines in einem Behälter (2) befindlichen Füllgutes (3) mittels eines Füllstandsmessgerätes (1), folgende Verfahrensschritte umfassend:
- Aussenden eines Sendesignals (S_{HF}) in Richtung des Füllgutes (3),
- Empfangen eines von der Messdistanz (d) abhängigen Empfangssignals (E_{HF}),
- Erstellen einer Auswertungskurve (A(d)) anhand von zumindest dem Empfangssignal (E_{HF}),
- Glätten der Auswertungskurve (A(d)) mittels zumindest eines Filterverfahrens,
- Bestimmung des Füllstandes (L) anhand der geglätteten Auswertungskurve (A(d)),
wobei die Auswertungskurve (A(d)) in Abhängigkeit der Messdistanz (d) verschieden stark geglättet wird,
wobei als Filterverfahren zur Glättung der Auswertungskurve (A(d)) eine Tiefpassfilterung, eine insbesondere gleitende Mittelwertfilterung und/oder eine insbesondere gleitende Maximalwertfilterung eingesetzt wird,
wobei die Messdistanz (d) in einen Nahbereich (I), einen mittleren Teilbereich (II) und einen Fernbereich (III) unterteilt ist,
**dadurch gekennzeichnet, dass**
die Glättung im Nahbereich (I) und im Endbereich (III) im Vergleich zum mittleren Teilbereich (II) geringer eingestellt ist.

2. Verfahren nach Anspruch 1,
**dadurch gekennzeichnet, dass**
das Sendesignal (S_{HF}) in Form eines Ultraschallsignals oder eines Radar-Signals, insbesondere eines Radar-Signals nach dem FMCW- oder Pulslaufzeit-Verfahren, ausgesendet wird.

3. Verfahren nach einem der vorhergehenden Ansprüche,
**dadurch gekennzeichnet, dass**
in zumindest einem Teilbereich (II) der Messdistanz (d) ein von einem angrenzenden Teilbereich (I, III) abweichendes Filterverfahren implementiert ist.

4. Verfahren nach Anspruch 2 oder 3,
**dadurch gekennzeichnet, dass**
für den Fall, dass als Filterverfahren eine Mittelwertfilterung und/oder eine Maximalwertfilterung eingesetzt werden/wird, der Mittelwertfilter und/oder der Maximalwertfilter mit einer Fensterbreite, die sich in Abhängigkeit der Messdistanz (d) ändert, ausgelegt ist.

5. Verfahren nach Anspruch 4,
**dadurch gekennzeichnet, dass**
die Fensterbreite linear oder nichtlinear, insbesondere exponentiell und/oder logarithmisch, mit der Messdistanz (d) verändert wird, und/oder dass die Fensterbreite in zumindest zwei verschiedenen Teilbereichen (I, II, III) der Messdistanz (d) konstant mit jeweils verschiedenen Breiten eingestellt ist.

6. Füllstandsmessgerät (1) zur Durchführung des Verfahrens nach einem der vorhergehenden Ansprüche, umfassend:
- Eine Sendeeinheit, die ausgelegt ist, das Sendesignal (S_{HF}) auszusenden,
- Eine Empfangseinheit, die derart ausgestaltet ist, um das Empfangssignal (E_{HF}) zu empfangen, und
- Eine Auswerteeinheit, die konzipiert ist, um
∘ anhand von zumindest dem Empfangssignal (E_{HF}) die Auswertekurve (A(d)) zu erstellen,
∘ die Auswertekurve (A(d)) in Abhängigkeit der Messdistanz (d) verschieden zu glätten, und
∘ anhand der geglätteten Auswertekurve (A(d)) den Füllstand (L) zu bestimmen.

## Claims

1. Method for determining the filling level (L) of a filling material (3) located in a container (2) by means of a filling level measuring device (1), comprising the following method steps:
- Emitting a transmission signal (S_{HF} ) in the direction of the product (3),
- Receiving a received signal (E_{HF} ) that depends on the measuring distance (d),
- Create an evaluation curve (A(d)) using at least the received signal (E ),_{HF}
- Smoothing of the evaluation curve (A(d)) using at least one filter method,
- Determination of the fill level (L) using the smoothed evaluation curve (A(d)),
whereby the evaluation curve (A(d)) is smoothed to varying degrees depending on the measurement distance (d),
wherein low-pass filtering, in particular moving average filtering and/or in particular moving maximum value filtering is used as the filter method for smoothing the evaluation curve (A(d)),
whereby the measuring distance (d) is divided into a close range (I), a medium range (II) and a long range (III),
**characterized in that**
the smoothing is set lower in the close range (I) and in the end range (III) compared to the middle sub-range (II).

2. Method according to claim 1,
**characterized in that**
the transmission signal (S_{HF}) is emitted in the form of an ultrasonic signal or a radar signal, in particular a radar signal according to the FMCW or pulse transit time method.

3. A method according to any one of the preceding claims,
**characterized in that**
a filter method that differs from an adjacent partial range (I, III) is implemented in at least one partial range (II) of the measuring distance (d).

4. Method according to claim 2 or 3,
**characterized in that**
in the event that mean value filtering and/or maximum value filtering is/are used as the filter method, the mean value filter and/or the maximum value filter is/are designed with a window width that changes depending on the measuring distance (d).

5. Method according to claim 4,
**characterized in that**
the window width is changed linearly or non-linearly, in particular exponentially and/or logarithmically, with the measuring distance (d), and/or
that the window width is set constantly with different widths in at least two different partial areas (I, II, III) of the measuring distance (d).

6. A level measuring device (1) for carrying out the method according to any one of the preceding claims, comprising:
- A transmitter unit designed to transmit the transmission signal (S ),_{HF}
- A receiving unit designed to receive the received signal (E_{HF} ), and
- An evaluation unit that is designed to
∘ to create the evaluation curve (A(d)) using at least the received signal (E ), HF
∘ to smooth the evaluation curve (A(d)) differently as a function of the measuring distance (d), and
∘ to determine the fill level (L) using the smoothed evaluation curve (A(d)).

## Revendications

1. Procédé pour déterminer le niveau de remplissage (L) d'un produit (3) se trouvant dans un récipient (2) au moyen d'un appareil de mesure de niveau de remplissage (1), comprenant les étapes de procédé suivantes :
- l'émission d'un signal d'émission (S_{HF} ) en direction du produit de remplissage (3),
- réception d'un signal de réception (E_{HF} ) dépendant de la distance de mesure (d),
- l'établissement d'une courbe d'évaluation (A(d)) à l'aide d'au moins le signal de réception (E_{HF} ),
- le lissage de la courbe d'évaluation (A(d)) au moyen d'au moins un procédé de filtrage,
- Détermination du niveau (L) à l'aide de la courbe d'évaluation lissée (A(d)),
la courbe d'évaluation (A(d)) étant lissée à des degrés différents en fonction de la distance de mesure (d),
dans lequel on utilise comme procédé de filtrage pour le lissage de la courbe d'évaluation (A(d)) un filtrage passe-bas, un filtrage notamment glissant de la valeur moyenne et/ou un filtrage notamment glissant de la valeur maximale,
la distance de mesure (d) étant divisée en une zone proche (I), une zone partielle moyenne (II) et une zone lointaine (III),
**caractérisé en ce que**
le lissage est réglé plus faiblement dans la zone proche (I) et dans la zone finale (III) par rapport à la zone partielle centrale (II).

2. Procédé selon la revendication 1,
**caractérisé en ce que**
le signal d'émission (S_{HF} ) est émis sous la forme d'un signal ultrasonore ou d'un signal radar, en particulier d'un signal radar selon le procédé FMCW ou le procédé du temps de propagation des impulsions.

3. Procédé selon l'une quelconque des revendications précédentes,
**caractérisé en ce que**
dans au moins une zone partielle (II) de la distance de mesure (d), un procédé de filtrage différent d'une zone partielle adjacente (I, III) est mis en oeuvre.

4. Procédé selon la revendication 2 ou 3,
**caractérisé en ce que**
dans le cas où un filtrage de valeur moyenne et/ou un filtrage de valeur maximale est/sont utilisé(s) comme procédé de filtrage, le filtre de valeur moyenne et/ou le filtre de valeur maximale est/sont conçu(s) avec une largeur de fenêtre qui varie en fonction de la distance de mesure (d).

5. Procédé selon la revendication 4,
**caractérisé en ce que**
la largeur de la fenêtre est modifiée de manière linéaire ou non linéaire, en particulier de manière exponentielle et/ou logarithmique, avec la distance de mesure (d), et/ou **en ce que** la largeur de fenêtre est réglée de manière constante dans au moins deux zones partielles différentes (I, II, III) de la distance de mesure (d) avec des largeurs respectivement différentes.

6. Appareil de mesure de niveau (1) pour la mise en oeuvre du procédé selon l'une des revendications précédentes, comprenant :
- Une unité d'émission conçue pour émettre le signal d'émission (S_{HF} ),
- une unité de réception qui est conçue pour recevoir le signal de réception (E_{HF} ), et
- Une unité d'évaluation conçue pour
∘ d'établir la courbe d'évaluation (A(d)) à l'aide d'au moins le signal de réception (E ),_{HF}
∘ de lisser différemment la courbe d'évaluation (A(d)) en fonction de la distance de mesure (d), et
∘ de déterminer le niveau (L) à l'aide de la courbe d'évaluation lissée (A(d)).
